# EUROPÄISCHE PATENTANMELDUNG

(11) **EP 3 791 707 A1**
(43) Veröffentlichungstag der Anmeldung: **17.03.2021**
(21) Anmeldenummer: 20193461.9
(22) Anmeldetag: 28.08.2020
(51) Int. Cl.: A01B 69/00

(54) **VORRICHTUNG ZUM BODENNAHEN BEARBEITEN VON PFLANZLICHEM MATERIAL UND VERFAHREN ZUM BODENNAHEN BEARBEITEN VON PFLANZLICHEM MATERIAL**

(30) Priorität: 10.09.2019 DE 102019124310
(71) Anmelder: F.X.S. Sauerburger Traktoren und Gerätebau GmbH, 79241 Ihringen (DE)
(72) Erfinder: Sexauer, Christoph, 79241 Ihringen (DE); Mayer, Benedikt, 79292 Pfaffenweiler (DE); Lamparter, Anton, 79102 Freiburg (DE); Sauerburger, Franz Xaver, 79241 Wasenweiler (DE)
(74) Vertreter: RACKETTE Patentanwälte PartG mbB

(57) **Zusammenfassung**

Bei einer Vorrichtung (124) zum bodennahen Bearbeiten von pflanzlichem Material (121) ist vorgesehen, die Ausrichtung einer Deichsel (127) in Bezug auf das Zugfahrzeug (109) und den mit der Deichsel (127) ausgestatteten Bearbeitungsnachläufer (124) automatisch zu regeln und insbesondere Lenkbewegungen des Zugfahrzeugs (109) auszugleichen. Dadurch hält der Bearbeitungsnachläufer (124) automatisch eine vorbestimmte, insbesondere auch seitlich versetzte Spur hinter dem Zugfahrzeug (109) ein. Weiterhin lassen sich auch Wendemanöver relativ schnell durchführen.

## Beschreibung

Die Erfindung betrifft eine Vorrichtung zum bodennahen Bearbeiten von pflanzlichem Material.

Die Erfindung betrifft weiterhin ein Verfahren zum bodennahen Bearbeiten von pflanzlichem Material.

Aus der Praxis und beispielsweise auch aus DE 103 07 234 A1 sind Vorrichtungen und Verfahren zum bodennahen Bearbeiten von pflanzlichem Material bekannt. Typischerweise verfügen derartige Vorrichtungen über an Arbeitswerkzeugträgern angebrachte Arbeitswerkzeuge, wobei die Arbeitswerkzeugträger an einem über eine Deichsel an einem Zugfahrzeug befestigbaren Tragrahmen angebracht sind. Zum bodennahen Bearbeiten von pflanzlichem Material zieht das Zugfahrzeug den Tragrahmen in einer Spur über ein Feld, wobei an den Feldrändern Wendemanöver durchzuführen sind.

Der Erfindung liegt die Aufgabe zugrunde, eine Vorrichtung zum bodennahen Bearbeiten von pflanzlichem Material anzugeben, mit der im Zusammenspiel mit einem Zugfahrzeug sowie gegebenenfalls weiteren Begleitfahrzeugen ein effizientes Bearbeiten geschaffen und insbesondere auch Wendemanöver zügig durchführbar sind.

Der Erfindung liegt weiterhin die Aufgabe zugrunde, ein Verfahren zum bodennahen Bearbeiten von pflanzlichem Material anzugeben, das sich rasch und bodenschonend durchführen lässt.

Die erstgenannte Aufgabe wird erfindungsgemäß mit einer Vorrichtung zum bodennahen Bearbeiten von pflanzlichem Material mit den Merkmalen des Anspruchs 1 gelöst.

Die zweitgenannte Aufgabe wird bei einem Verfahren zum bodennahen Bearbeiten von pflanzlichem Material mit den Merkmalen des Anspruchs 8 gelöst.

Dadurch, dass sich erfindungsgemäß die Deichsel mit der Deichselausrichtungseinheit in Abhängigkeit von der Ausrichtung des Tragrahmens zu dem Zugfahrzeug in Gestalt von doppelten Winkellagen der Deichsel, nämlich einmal zum Zugfahrzeug und zum anderen zum Tragrahmen, erfassbar und mit einer Steuereinheit verarbeitbar sind, lässt sich der Tragrahmen automatisch entlang einer vorbestimmten und zweckmäßigerweise sowohl ein lückenloses Bearbeiten von pflanzlichem Material als auch für Wendemanöver optimierten Spur nahezu automatisiert bewegen.

Zweckmäßige Ausgestaltungen von Vorrichtungen und Verfahren gemäß der Erfindung sind Gegenstand der abhängigen Ansprüche.

Weitere zweckmäßige Ausgestaltungen und Vorteile der Erfindung ergeben sich aus der nachfolgenden Beschreibung eines bevorzugten Ausführungsbeispiels mit Bezug auf die Figuren der Zeichnung.

Es zeigen:
- Fig. 1: in einer anschaulichen dreidimensionalen Ansicht ein Ausführungsbeispiel gemäß der Erfindung in Gestalt eines Bearbeitungsnachläufers auf einem Feld, das an ein Zugfahrzeug angehängt ist und nach einem vor dem Zugfahrzeug erfolgenden Mähvorgang hinter dem Zugfahrzeug verbleibendes pflanzliches Material bodennah bearbeitet,
- Fig. 2: die Anordnung gemäß Fig. 1 in einer Draufsicht, wobei der Bearbeitungsnachläufer gegenüber dem Zugfahrzeug in Fahrtrichtung links versetzt ist,
- Fig. 3: die Anordnung gemäß Fig. 1 und Fig. 2 mit einem in Fahrtrichtung gegenüber dem Zugfahrzeug rechts versetzten Bearbeitungsnachläufer,
- Fig. 4: in einer perspektivischen Ansicht das Ausführungsbeispiel in Gestalt eines Bearbeitungsnachläufers gemäß Fig. 1,
- Fig. 5: in einer teilgeschnittenen perspektivischen Ansicht eine Ausführung eines Außenarms bei einem Bearbeitungsnachläufer gemäß Fig. 4,
- Fig. 6: in einer perspektivischen Detailansicht einen Kupplungsbereich einer Deichsel,
- Fig. 7: in einer perspektivischen Detailansicht den Verbindungsbereich der Deichsel mit einem Tragrahmen des Bearbeitungsnachläufers,
- Fig. 8: in einer perspektivischen Ansicht den Kopplungsbereich einer Arbeitswelle,
- Fig. 9: in einer perspektivischen Detailansicht den Anlenkungsbereich eines Tragbalkens eines Außenarms,
- Fig. 10: in einer perspektivischen Ansicht einen Übergangsbereich zwischen dem Tragrahmen und einem Fahrwerk,
- Fig. 11: in einer perspektivischen Detailansicht den Übergangsbereich eines Trägerbalkens zu dem Tragrahmen,
- Fig. 12: in einem Blockschaubild eine Anordnung von Sensoren und einer Steuereinheit und
- Fig. 13: in einem Blockschaubild die beispielhafte Ausgestaltung einer Steuereinheit.

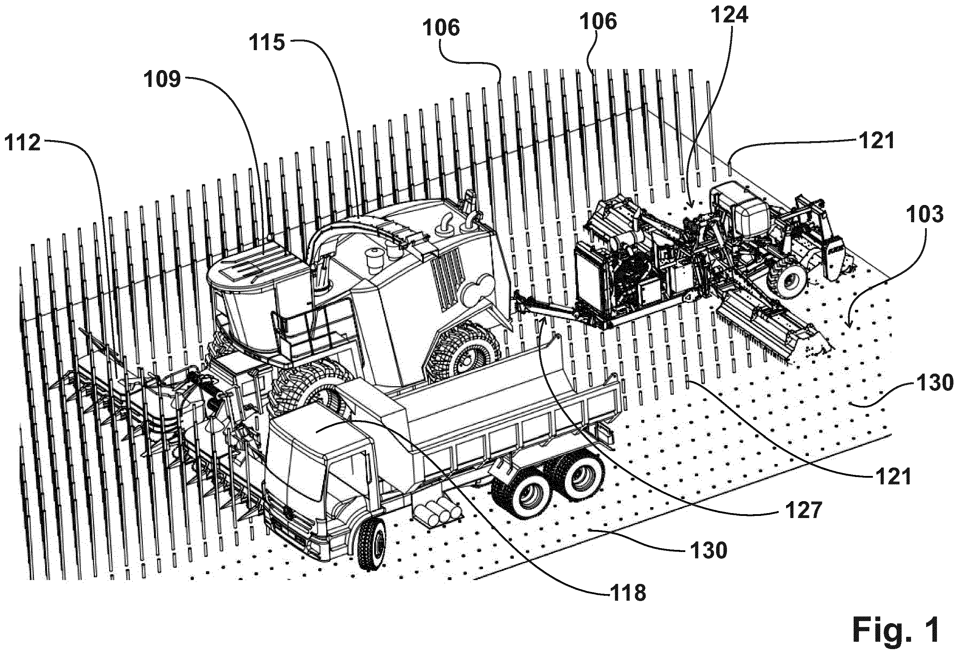

Fig. 1 zeigt in einer anschaulichen perspektivischen Ansicht ein landwirtschaftlich genutztes Feld 103, auf dem eine Feldfrucht wie beispielsweise schematisch dargestellte Maisstängel 106 gewachsen sind und abgeerntet werden soll.

Zum Abernten sind in der Darstellung gemäß Fig. 1 zum einen ein Zugfahrzeug hier in Gestalt eines Feldhäckslers 109 im Einsatz, der über ein in Fahrtrichtung vorne angeordnetes Mähwerk 112 verfügt, mit dem die Feldfrüchte, hier in Gestalt von Maisstängeln 106, abmähbar und einem in dem Feldhäcksler 109 integrierten Häckselwerk zuführbar sind. Die Häckselprodukte sind mittels eines Auswurfturms 115 auf einen Abfahrwagen 118 überführbar, der auf einer Seite in einem Abstand neben dem Feldhäcksler 109 fährt.

Nach Abmähen der Maisstängel 106 verbleiben auf dem Feld als pflanzliches Material noch mit einer gewissen Stängelrestlänge vorstehende Reststoppel 121, die üblicherweise durch Mulchen bodennah bearbeitet werden.

Es versteht sich, dass andere Ausführungsbeispiele einer erfindungsgemäßen Vorrichtung für das bodennahe Bearbeiten von pflanzlichem Material beispielsweise zum Mähen ausgestaltet sind. Hierfür ist in Fig. 1 ein Bearbeitungsnachläufer 124 als ein Ausführungsbeispiel einer Vorrichtung gemäß der Erfindung in Gestalt eines Mulchgeräts dargestellt, der über eine Nachläuferdeichsel 127, hier in Gestalt einer Parallelogrammdeichsel, als Deichsel an den Feldhäcksler 109 angehängt ist und diesem, wie weiter unten näher erläutert, eine vorbestimmte Spur einhaltend folgt. Mit dem Bearbeitungsnachläufer 124 sind die Reststoppel 121 bodennah dahingehend bearbeitbar, dass nur noch Reststrunke 130 verbleiben, die mit der Oberfläche des Feldes 103 im Wesentlichen abschließen, wobei das pflanzliche Material aus der Stängelrestlänge typischerweise zerkleinert worden ist.

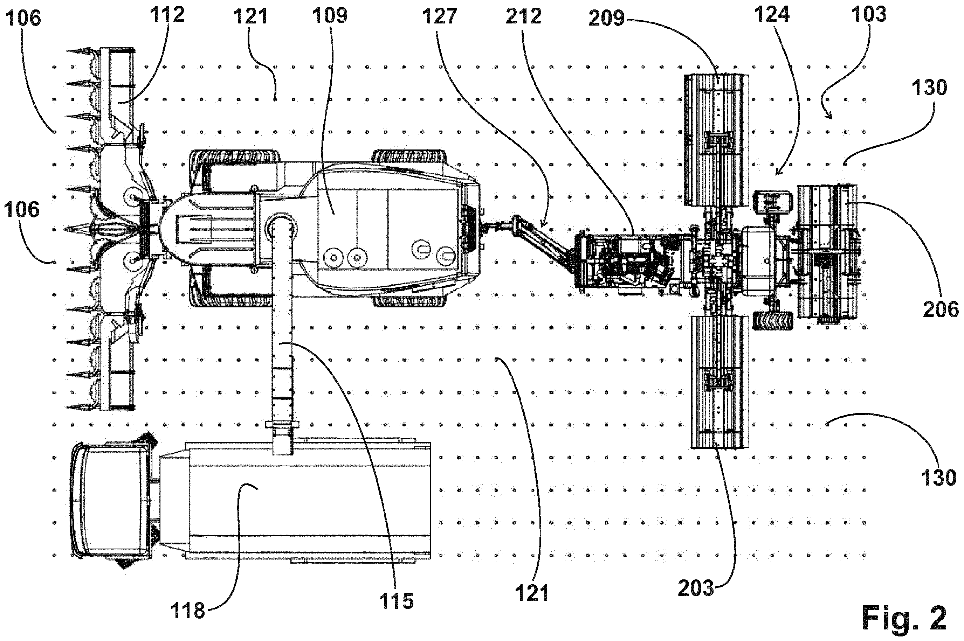

Fig. 2 zeigt in einer Draufsicht die Anordnung gemäß Fig. 1. Aus Fig. 2 ist ersichtlich, dass der Bearbeitungsnachläufer 124 in der Anordnung gemäß Fig. 2 in Fahrtrichtung des Feldhäckslers 109 in einer vorbestimmten sowie automatisiert gehaltenen Spur gegenüber der Mittellängsachse des Feldhäckslers 109 nach links versetzt dem Feldhäcksler 109 nachläuft. Der Abfahrwagen 118 fährt bei dieser Anordnung des Gespanns aus Feldhäcksler 109 und Bearbeitungsnachläufer 124 links, hier in einem maximalen seitlichen Abstand, neben dem Feldhäcksler 109. Weiterhin lässt sich der Darstellung gemäß Fig. 2 entnehmen, dass der Bearbeitungsnachläufer 124 zum Durchführen des bodennahen Bearbeitens des pflanzlichen Materials in Gestalt der Reststoppel 121 über einen ersten Außenarm 203, über einen Mittelarm 206 und über einen zweiten Außenarm 209 verfügt, die, wie weiter unten näher erläutert, schwenkbar an einem Tragrahmen 212 des Bearbeitungsnachläufers 124 angebracht sind und in Querrichtung den größten Teil des von dem Mähwerk 112 bearbeiteten Bereichs lückenlos abdecken.

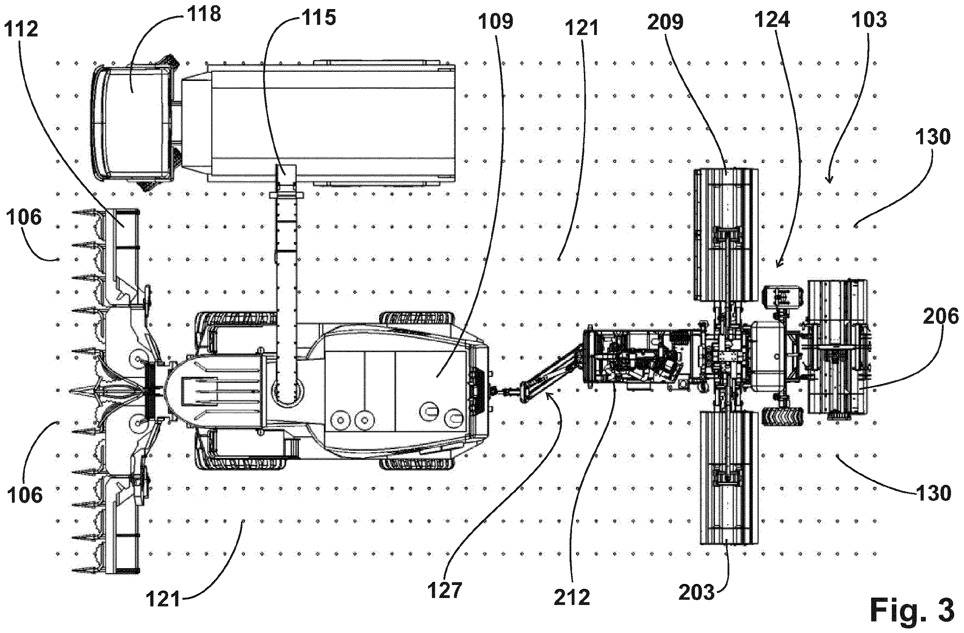

Fig. 3 zeigt in einer Draufsicht die Anordnung gemäß Fig. 1 und Fig. 2, wobei in diesem Sinne abweichend von der Darstellung gemäß Fig. 2 der Bearbeitungsnachläufer 124 in Fahrtrichtung des Feldhäckslers 109 gegenüber dem Feldhäcksler 109 nach rechts versetzt ist und diesem somit in einer nach rechts versetzten vorbestimmten sowie automatisiert gehaltenen Spur folgt. Dementsprechend fährt der Abfahrwagen 118 in der Darstellung gemäß Fig. 3 in Fahrtrichtung des Feldhäckslers 109 ebenfalls rechts neben dem Feldhäcksler 109.

Diese variablen Einsatzmöglichkeiten und das automatisierte Spurhalten des Bearbeitungsnachläufers 124 sind, wie weiter unten näher erläutert, durch die Ausgestaltung der Nachläuferdeichsel 127 mit Sensorik sowie einer Regelung geschaffen.

In den Darstellungen gemäß Fig. 2 und Fig. 3 sind die Feldhäcksler 109 und der Abfahrwagen 118 in einer Parallelfahrt mit maximalem Abstand dargestellt. Ebenso betriebstypisch ist jedoch, dass der seitliche Abstand zwischen dem Feldhäcksler 109 und dem Abfahrwagen 118 kleiner ist.

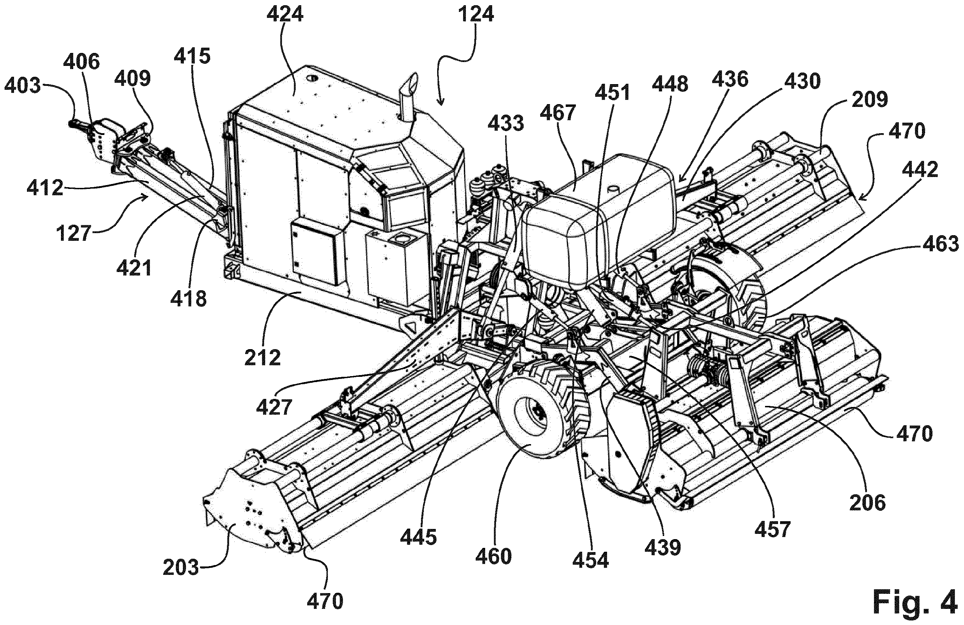

Fig. 4 zeigt in einer perspektivischen detaillierten Ansicht den Bearbeitungsnachläufer 124 gemäß Fig. 1 als Ausführungsbeispiel einer Vorrichtung gemäß der Erfindung. Aus Fig. 4 ist ersichtlich, dass die Nachläuferdeichsel 127 über eine Anhängekupplung 403 verfügt, die mit einem in Fig. 4 nicht dargestellten Zugfahrzeug verbindbar ist. Die Anhängekupplung 403 steht über ein Zwischenstück 406 mit einem ersten Stangenlager 409 in Verbindung, an dem die zugfahrzeugseitigen Enden einer ersten Deichselstange 412 und einer zweiten Deichselstange 415 gelenkig angebracht sind. Die Deichselstangen 412, 415 sind parallel sowie zwischen zwei Anschlagstellungen mit einem Abstand voneinander angeordnet und mit ihren dem ersten Stangenlager 409 abgewandten weiteren Enden gelenkig mit einem zweiten Stangenlager 418 verbunden, das an dem Tragrahmen 212 angebracht ist.

Zwischen einem dem ersten Stangenlager 409 zugewandten Ende einer Deichselstange 412, 415, bei dem Ausführungsbeispiel gemäß Fig. 4 der zweiten Deichselstange 415, und dem dem zweiten Stangenlager 418 zugewandten Ende der anderen Deichselstange 412, 415, hier der ersten Deichselstange 412, erstreckt sich als Deichselausrichtungseinheit ein auf Zug und Druck arbeitender doppelwirkender Deichselausrichtungshydraulikzylinder 421, mit dem der Abstand zwischen den Deichselstangen 412, 415 und damit die Winkellagen der Deichselstangen 412, 415 zu dem Tragrahmen 212 sowie zum Zugfahrzeug und damit der seitliche Versatz des Bearbeitungsnachläufers 124 zu dem Zugfahrzeug veränderbar ist.

Weiterhin lässt sich der Darstellung gemäß Fig. 4 entnehmen, dass der Bearbeitungsnachläufer 124 über ein Energieversorgungsaggregat 424, beispielsweise in Gestalt einer Dieselmotoreinheit, verfügt, das zwischen der Nachläuferdeichsel 127 und den Außenarmen 203, 209 angeordnet ist. Mit dem Energieversorgungsaggregat 424 sind die energieverbrauchenden Komponenten des Bearbeitungsnachläufers 124 mit Energie in Gestalt von Strom und durch die Hydraulikpumpen bereitgestellten Hydraulikdruck beaufschlagbar. Dadurch hat der Bearbeitungsnachläufer 124 energetisch eine weitgehende bis vollständige Energieautarkie.

Aus der Darstellung gemäß Fig. 4 lässt sich erkennen, dass jeder Außenarm 203, 209 über einen Außenarmträgerbalken 427, 430 gelenkig und bei bestimmungsgemäßer Anordnung des Bearbeitungsnachläufers 124 in Bezug auf den Tragrahmen 212 in vertikaler Richtung durch doppelwirkende Außenarmhebezylinder 433, 436 schwenkbar ist. Der Mittelarm 206 ist über Mittelarmträgerbalken 439, 424 ebenfalls bei bestimmungsgemäßer Anordnung des Bearbeitungsnachläufers 124 gegenüber dem Tragrahmen 212 in vertikaler Richtung mittels doppelwirkender Mittelarmhebezylinder 445, 448 schwenkbar.

Weiterhin ist in Fig. 4 ein Höhenlageeinstellzylinder 451 dargestellt, der doppelwirkend ausgebildet und, wie weiter unter näher erläutert, dazu eingerichtet ist, die Arbeitshöhe des Bearbeitungsnachläufers 124 einzustellen.

An dem Tragrahmen 212 ist ein mittels eines Fahrwerkschwenkzylinders 454 gegenüber dem Tragrahmen 212 schwenkbares Fahrwerk 457 mit durch das Energieversorgungsaggregat 424 gegebenenfalls auch aktiv zum Drehen antreibbaren Räder 460, 463 angebracht, um den Bearbeitungsnachläufer 124 für eine Überführungsfahrt insbesondere auch auf einer Straße rollend zu bewegen. Der Tragrahmen 212 trägt einen Betriebsmittelvorratsbehälter 467, mit dem Betriebsmittel wie insbesondere Dieselkraftstoff bei Ausbilden des Energieversorgungsaggregats 424 mit einem Dieselmotor mit dem Bearbeitungsnachläufer 124 mitführbar sind. Für den Fall, dass ein Zugfahrzeug für den ordnungsgemäßen Betrieb des Bearbeitungsnachläufers 124 eine zu geringe Antriebsleistung hat, lässt sich das Energieversorgungsaggregat 424 auf die Räder 460, 463 aufschalten, so dass der Bearbeitungsnachläufer 124 unterstützend fahrend oder gar selbstfahrend ist.

Die Außenarme 203, 209 und der Mittelarm 206 weisen in Fahrtrichtung rückseitig angeordnete Laufwalzen 470 auf, die bei einer Bearbeitungsfahrt auf dem Feld 103 aufliegen und den Boden des Felds 103 zu einem gewissen Umfang einebnen. Weiterhin dienen die Laufwalzen 470 als Auflager beim Einstellen der Arbeitshöhe des Bearbeitungsnachläufers 124 durch den Höhenlageeinstellzylinder 451.

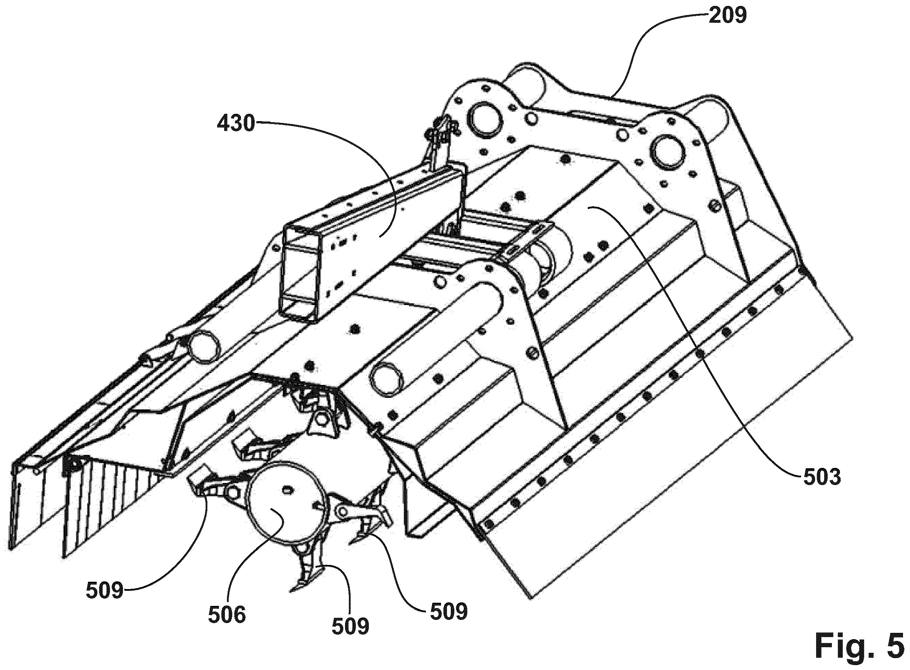

Fig. 5 zeigt in einer teilgeschnittenen perspektivischen Darstellung den außenseitigen Endbereich des zweiten Außenarms 209, wobei der nachfolgend erläuterte Aufbau des zweiten Außenarms 209 zum bodennahen Bearbeiten von pflanzlichem Material entsprechend auch bei dem ersten Außenarm 203 und dem Mittelarm 206 zu finden ist. Der Außenarm 209 verfügt über eine äußere Schutzverkleidung 503, die in einem Abstand eine Arbeitswelle 506 als Arbeitswerkzeugträger umgibt, die drehbar gelagert ist. An der Arbeitswelle 506 ist eine Anzahl von Arbeitswerkzeugen 509, bei dem Bearbeitungsnachläufer 124 in Gestalt von Hammerschlegeln und/oder Schlegelmessers, angebracht, um pflanzliches Material wie Reststoppel 121 bodennah zu bearbeiten, beispielsweise zu mulchen.

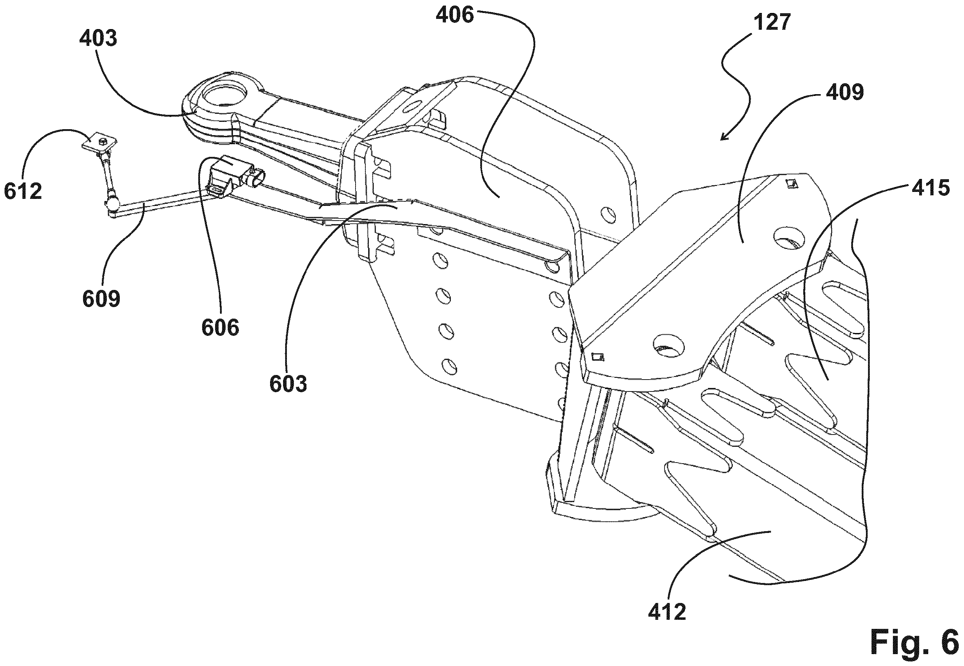

Fig. 6 zeigt in einer perspektivischen detaillierten Ansicht die Ausgestaltung der Nachläuferdeichsel 127 im Bereich der Anhängekupplung 403, des Zwischenstücks 406 und des ersten Stangenlagers 409. Aus Fig. 6 ist ersichtlich, dass an dem Zwischenstück 406 ein sich von dem Zwischenstück 406 in Richtung der Anhängekupplung 403 erstreckendes längliches Sensorbefestigungsteil 603 angebracht ist, das an seinem dem Zwischenstück 406 abgewandten Ende einen Lenkpositionssensor 606 einer Lenkpositionssensoreinheit trägt. Auf den Lenkpositionssensor 606 wirkt ein Lenkpositionsgelenkteil 609 der Lenkpositionssensoreinheit ein, das mit einem Ende mit dem Lenkpositionssensor 606 und mit dem anderen Ende mit einem Zugfahrzeugbefestigungsteil 612 verbunden ist. Das Zugfahrzeugbefestigungsteil 612 ist mit einem in Fig. 6 nicht dargestellten Zugfahrzeug, beispielsweise in Gestalt des Feldhäckslers 109, verbindbar oder verbunden.

Dadurch ist mit dem Lenkpositionssensor 606 die Winkellage des Zwischenstücks 406 in Bezug auf ein Zugfahrzeug und damit in Bezug auf dessen Lenkposition erfassbar sowie in Lenkpositionssignale umwandelbar.

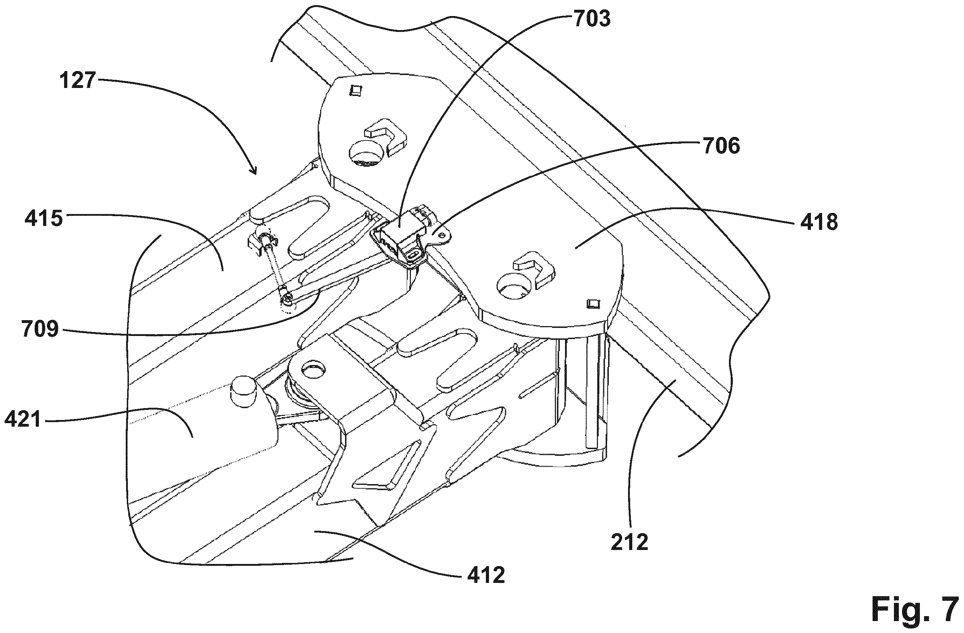

Fig. 7 zeigt in einer perspektivischen detaillierten Ansicht die Nachläuferdeichsel 127 im Bereich des mit dem Tragrahmen 212 fest verbundenen zweiten Stangenlagers 418. Aus Fig. 7 ist ersichtlich, dass das zweite Stangenlager 418 einen Deichselausrichtungssensor 703 einer Deichselausrichtungssensoreinheit trägt, der über eine Befestigungsplatte 706 an dem zweiten Stangenlager 418 angebracht und mit einem Ende eines auf ihn einwirkenden Deichselausrichtungsgelenkteils 709 der Deichselausrichtungssensoreinheit verbunden ist. Das andere Ende des Deichselausrichtungsgelenkteils 709 ist an dem dem zweiten Stangenlager 418 zugewandten Ende der zweiten Deichselstange 415 angebracht. Dadurch lässt sich mit dem Deichselausrichtungssensor 703 der Winkel der zweiten Deichselstange 415 und damit der Nachläuferdeichsel 127 in Bezug auf den Tragrahmen 212 erfassen und in Deichselausrichtungssignale umwandeln.

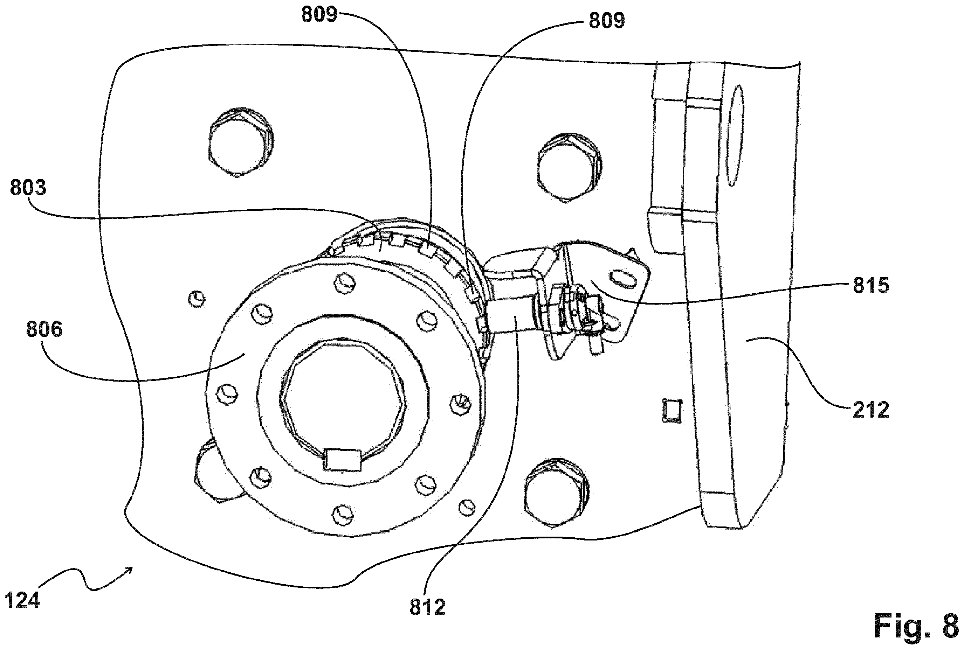

Fig. 8 zeigt in einer perspektivischen detaillierten Ansicht einen Ausschnitt des Bearbeitungsnachläufers 124 im Bereich einer eine in Fig. 8 nicht dargestellte Arbeitswelle 506 antreibenden Antriebswelle 803, die über einen Wellenanschlussflansch 806 lösbar mit einer zugehörigen Arbeitswelle 506 verbindbar ist. Aus Fig. 8 ist ersichtlich, dass die Antriebswelle 803 eine Anzahl von entlang des Außenumfangs angeordneten Umfangsmarkierungen 809 einer Drehsensoreinheit aufweist. Den Umfangsmarkierungen 809 radial gegenüberliegend ist ein Drehsensor 812 der Drehsensoreinheit angeordnet, der über einen Befestigungswinkel fest mit dem Tragrahmen 212 verbunden ist. Mit dem Drehsensor 812 ist der Drehzustand, und dabei insbesondere die Drehzahl, der Antriebswelle 803 und damit auch der mit der Antriebswelle 803 verbundenen Arbeitswelle 506 erfassbar und als Drehsignale ausgebbar.

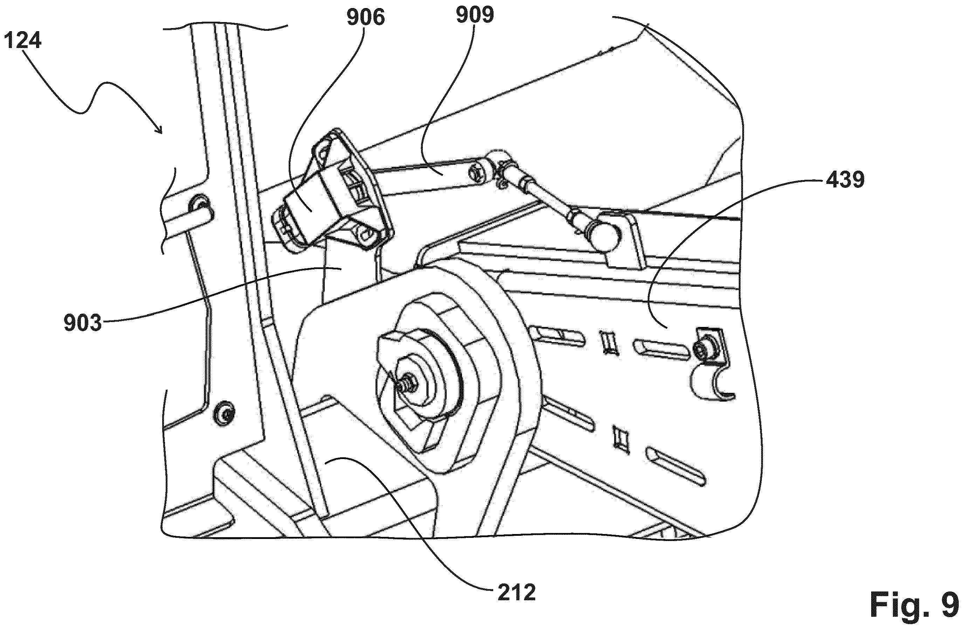

Fig. 9 zeigt in einer perspektivischen Detailansicht den Bearbeitungsnachläufer 124 im Bereich eines dem Tragrahmen 212 zugewandten Endes eines Außenarmträgerbalkens 439. Aus Fig. 9 ist ersichtlich, dass an den Tragrahmen 212 eine Befestigungsplatte 903 angebracht ist, die einen Außenarmschwenkpositionssensor 906 einer Außenarmschwenkpositionssensoreinheit trägt. An dem Außenarmschwenkpositionssensor 906 ist ein Ende eines Außenarmschwenkpositionsgelenkteils 909 der Außenarmschwenkpositionssensoreinheit angebracht, dessen anderes Ende mit dem Trägerbalken 439 verbunden ist. Dadurch ist mit dem Außenarmschwenkpositionssensor 906 die Schwenkposition des Trägerbalkens 439 in Bezug auf den Tragrahmen 212 erfassbar und als Schwenkpositionssignale ausgebbar.

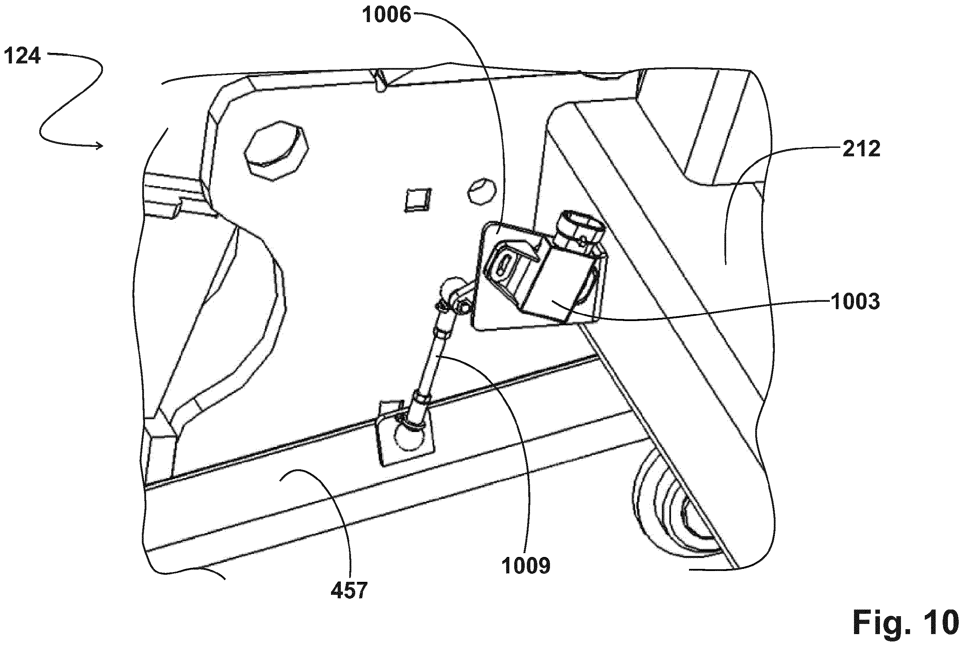

Fig. 10 zeigt in einer perspektivischen detaillierten Ansicht den Bearbeitungsnachläufer 124 im Übergangsbereich zwischen dem Tragrahmen 212 und dem Fahrwerk 457 Aus Fig. 10 ist ersichtlich, dass an dem Tragrahmen 212 ein Fahrwerklagesensor 1003 einer Fahrwerklagesensoreinheit über einen Befestigungswinkel 1006 angebracht ist. An dem Fahrwerklagesensor 1003 greift ein Ende eines Fahrwerklagegelenkteils 1009 der Fahrwerklagelagesensoreinheit an, dessen anderes Ende mit dem Fahrwerk 457 verbunden ist. Dadurch ist mit dem Fahrwerklagesensor 1003 die die mit dem Fahrwerkschwenkzylinder 454 einstellbare Höhenlage des Fahrwerks 457 bei bestimmungsgemäßer Anordnung des Bearbeitungsnachläufers 124 in vertikaler Richtung in Bezug auf den Tragrahmen 212 erfassbar und in Gestalt von Fahrwerkhöhenlagesignalen ausgebbar.

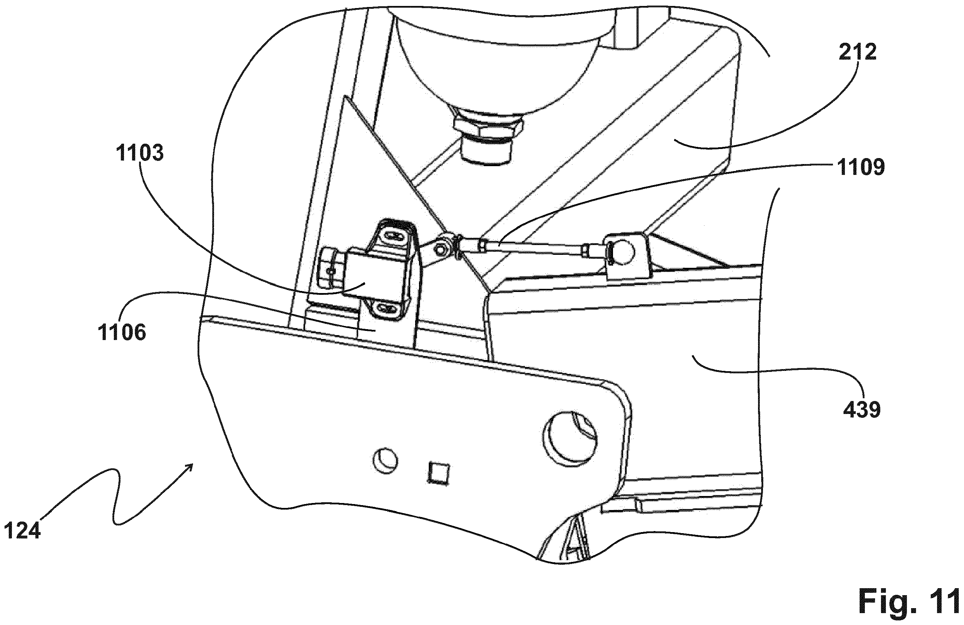

Fig. 11 zeigt in einer perspektivischen detaillierten Darstellung den Bereich des Bearbeitungsnachläufers 124 im Verbindungsbereich eines Mittelarmträgerbalkens 439 mit dem Tragrahmen 212. Aus Fig. 11 ist ersichtlich, dass an dem Tragrahmen 212 ein Mittelarmschwenkpositionssensor 1103 einer Mittelarmschwenkpositionssensoreinheit mittels einer Befestigungszunge 1106 angebracht ist. An den Mittelarmschwenkpositionssensor 1103 greift ein Ende eines Mittelarmschwenkpositionsgelenkteils 1109 der Mittelarmschwenkpositionssensoreinheit an, dessen anderes Ende mit dem Mittelarmträgerbalken 439 in Verbindung steht. Mit dem Mittelarmpositionssensor 1103 ist die Position des Mittelarmträgerbalkens 439 in Bezug auf den Tragrahmen 212 und damit die Höhenlage des Mittelarms 206 erfassbar sowie als Mittelarmpositionssignale ausgebbar.

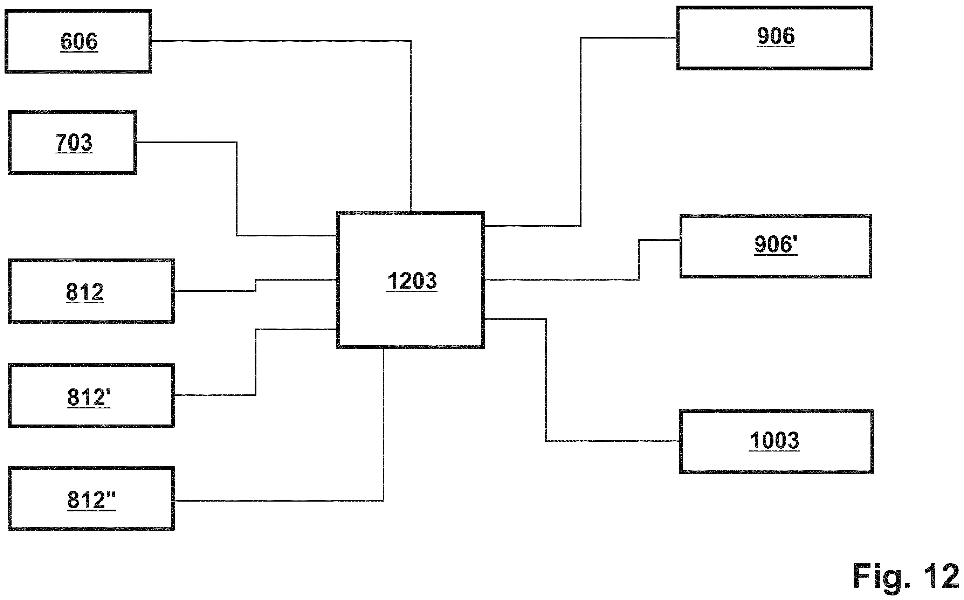

Fig. 12 zeigt in einem Blockschaubild in Zusammenschau die an eine Zentralsteuereinrichtung 1203 angeschlossenen Sensoren der verschiedenen Sensoreinheiten, nämlich den Lenkpositionssensor 606, den Deichselausrichtungssensor 703, die Drehsensoren 812, 812', 812" für die Arbeitswellen 506, die Außenarmschwenkpositionssensoren 906, 906' für die Außenarme 203, 209, den Fahrwerkhöhenlagesensor 1003 für das Fahrwerk 457 und den Mittelarmpositionssensor 1103 für den Mittelarm 206. Diese Sensoren speisen der Zentralsteuereinrichtung 1203 ihre für die vorangehend erläuterten Messgrößen charakteristischen Signale ein.

Die Zentralsteuereinrichtung 1203 ist dazu eingerichtet, diese Signale dahingehend zu verarbeiten, dass durch Ansteuerung des Deichselausrichtungshydraulikzylinders 421 über einen Regelkreis unter Berücksichtigung weiter unten näher erläuterter Betriebsmodi der Bearbeitungsnachläufer 124 in einer vorbestimmten und insbesondere auch seitlich versetzten Spur hinter einem Zugfahrzeug automatisch gesteuert hinterherläuft, um ein bodennahes Bearbeiten von pflanzlichem Material wie beispielsweise Mulchen durchzuführen, Wendemanöver auf Anforderung automatisiert zeitsparend zu fahren und eine Konfiguration für eine verkehrssichere Straßenfahrt einzunehmen.

Die Zentralsteuereinrichtung 1203 ist dazu eingerichtet, die automatisiert oder halbautomatisiert durchführbaren Manöver in einem manuellen Betriebsmodus händisch von einem Zugfahrzeug wie einem Feldhäcksler 109 aus oder von einem in dem Bearbeitungsnachläufer 124 integrierten Steuerstand aus händisch ausgelöst gesteuert durchzuführen.

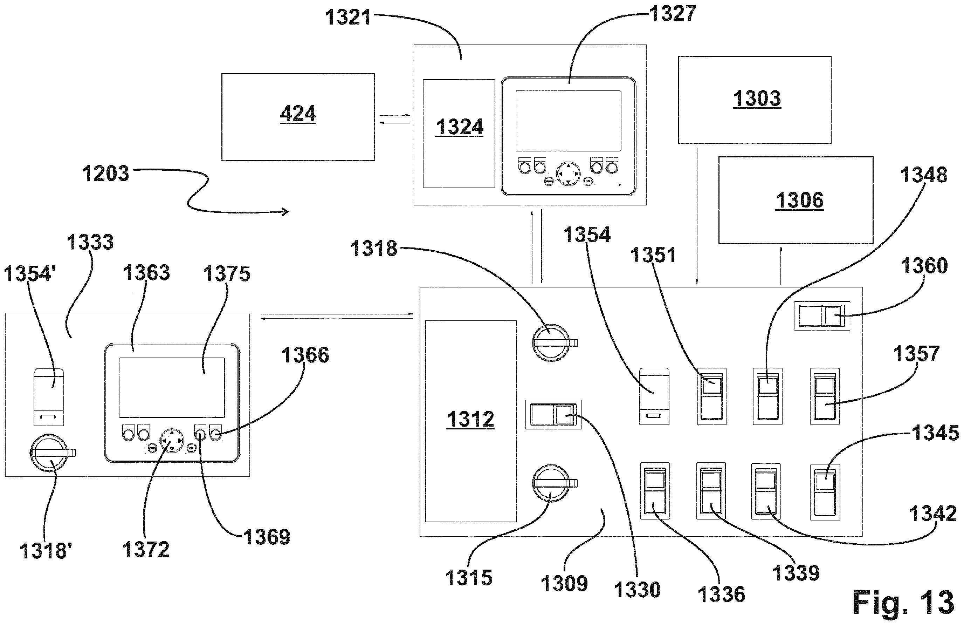

Fig. 13 zeigt in einem Blockschaltbild beispielhaft den Aufbau der Zentralsteuereinrichtung 1203 mit ihren wichtigsten Elementen und dem Zusammenwirken mit weiteren Komponenten des Bearbeitungsnachläufers 124, nämlich insbesondere dem Energieversorgungsaggregat 424, den im Zusammenhang mit Fig. 12 in Zusammenschau erläuterten, in der Darstellung gemäß Fig. 13 anschaulich in einer Sensoreinheit 1313 zusammengefassten Sensoren und einer Hydraulikeinheit 1306 zum Ansteuern der vorgenannten Zylinder in Gestalt des Deichselausrichtungshydraulikzylinders 421, der Außenarmhebezylinder 433, 436, der Mittelarmhebezylinder 445, 448, der Außenarmhöhenlagezylinder 451 und der Mittelarmschwenkzylinder 454. Die Zentralsteuereinrichtung 1203 weist ein Nachläufersteuermodul 1309 auf, das zweckmäßigerweise mit dem Tragrahmen 212 des Bearbeitungsnachläufers 124 verbunden ist. Das Nachläufersteuermodul 1309 ist mit einer Zentralprozessoreinheit 1312 ausgestattet, in der die Steuerfunktionen zum Betrieb des Bearbeitungsnachläufers 124 ausführbar sind. Das Nachläufersteuermodul 1309 verfügt bei diesem Ausführungsbeispiel über einen Hauptschalter 1315, mit dem der Bearbeitungsnachläufer 124 in einen betriebsbereiten Zustand schaltbar ist. Weiterhin ist das Nachläufersteuermodul 1309 mit einem Zündungsschalter 1318 ausgebildet, bei dessen Betätigung über einen Aggregatschaltschrank 1321 mit zugehöriger Aggregatssteuereinheit 1324 und zugehörigem Aggregatsbedienmodul 1327 das Energieversorgungsaggregat 424 zum Bereitstellen von Energie anschaltbar ist.

Als weiteres Bedienelement verfügt das Nachläufersteuermodul 1309 über einen Steuermoduswahlschalter 1330, mit dem zwischen einer Bedienung über ein mit einem Zugfahrzeug wie dem Feldhäcksler 109 in einer Kabine integrierten Kabinenbedienpult 1333 und einer Außenbedienung von dem Nachläufersteuermodul 1309 aus umschaltbar ist.

Für eine manuelle Steuerung von dem Nachläufersteuermodul 1309 aus weist das Nachläufersteuermodul 1309 einen Transportsicherungsschalter 1336 zum Sichern der Außenarme 203, 209 und des Mittelarms 206 in einer Transportstellung, einen Kupplungsstellungsschalter 1339 zum Schalten der Anhängekupplung 403 in wenigstens zwei Höhenlagen, zwei Außenarmstellungsschalter 1342 zum Schalten der Außenarme 203, 209 in wenigstens drei Schwenkstellungen, nämlich einer unteren Arbeitsstellung zum bodennahen Bearbeiten von pflanzlichem Material, einer demgegenüber geringfügig angehobenen Wendestellung zum Durchführen von Wendemanövern bei laufenden Arbeitswellen 506 und einer bei betriebstypischer Anordnung im Wesentlichen senkrechter Stellung für eine Überführungsfahrt, einen Fahrwerkwahlschalter 1348 zum Einstellen jeweils einer Höhenlage des Fahrwerks 457 für eine Bearbeitungsfahrt oder für eine Überführungsfahrt, einen Deichselausrichtungswahlschalter 1351 zum Einstellen einer gewünschten und einzuhaltenden Winkellage der Nachläuferdeichsel 127 in Bezug auf den Tragrahmen 212 sowie einen Zapfwellenkupplungsschalter 1354 zum Zuschalten und Abschalten der Arbeitswellen 506 auf.

Das Nachläufersteuermodul 1309 ist darüber hinaus mit einem Stützfußwahlschalter 1357 zum Anheben oder Absenken eines Stützfußes und mit einem Drosselschalter 1360 zum Reduzieren der Drehzahl eines Motors des Energieversorgungsaggregats 424 ausgestattet.

Das Kabinenbedienpult 1333 weist parallel zu dem Nachläufersteuermodul 1309 einen Zündungsschalter 1318' und einen Zapfwellenkupplungsschalter 1354' auf. Weiterhin ist das Kabinenbedienpult 1333 mit einer Kabinensteuereinheit 1363 ausgebildet, mit der über einen Lenkautomatikwahlschalter 1366 eine Lenkautomatik einschaltbar und ausschaltbar ist, ein Schwenkwahlschalter 1369 zum Überführen der Außenarme 203, 209 und des Mittelarms 206 in eine Fahrstellung oder in eine abgesenkte Stellung, einen Kombinationswahlschalter 1372 zum Bewegen der Außenarme 203, 209 und des Mittelarms 206 bei laufenden Arbeitswellen 506 in eine Arbeitsstellung und in eine Wendestellung sowie bei Deaktivierung der automatisierten Deichselausrichtsteuerung zum manuellen Einstellen der Ausrichtung der Nachläuferdeichsel 127.

Ein Bildschirm 1375 des Kabinenbedienpults 1333 dient zum Anzeigen von aktuellen und insbesondere von wesentlichen Betriebsparametern wie die Ausrichtung der Nachläuferdeichsel 127 sowie die Schwenkstellung der Außenarme 203, 209 sowie des Mittelarms 206.

Das Kabinenbedienpult 1333 ist dabei mit dem Nachläufersteuermodul 1309 drahtgebunden oder drahtlos im kontinuierlichen Datenaustausch.

Eine typische Verfahrensweise gemäß der Erfindung zum bodennahen Bearbeiten von pflanzlichem Material mit einer Vorrichtung gemäß der Erfindung geht beispielhaft wie folgt vonstatten. Vor Beginn einer Bearbeitungsfahrt zum bodennahen Bearbeiten von pflanzlichem Material 121 durch den Bearbeitungsnachläufer 124 wird bei in eine Arbeitsstellung abgesenkten Außenarmen 203, 209 und Mittelarm 206 sowie bei angehobenem Fahrwerk 457 für den Bearbeitungsnachläufer 124 eine Seitenlage in Bezug auf das Zugfahrzeug wie den Feldhäcksler 109 gewählt, was zu einer vorbestimmten Spur des Bearbeitungsnachläufers 124 in Bezug auf den Feldhäcksler 109 führt. Diese Spur wird aufgrund der oben erläuterten Ansteuerung des Deichselausrichtungshydraulikzylinders 421 automatisch eingehalten, kann bei Bedarf aber auch manuell verändert werden.

Diese Spur wird auch dann eingehalten, wenn der Feldhäcksler 109 beispielsweise geländebedingte Lenkbewegungen ausführt, die über den Lenkpositionssensor 606 kompensiert werden.

Für Wendemanöver werden die Außenarme 203, 209 und der Mittelarm 206 bei laufenden Arbeitswellen 506 geringfügig ausgehoben, so dass auch verhältnismäßig enge Kurvenradien gefahren werden können. Bei Wendemanövern hält der Bearbeitungsnachläufer 124 ebenfalls eine vorbestimmte Spur hinter einem Zugfahrzeug ein. Zweckmäßigerweise weist die Spur bei Wendemanövern den gleichen seitlichen Versatz gegenüber dem Zugfahrzeug wie bei einer Bearbeitungsfahrt auf. Nach einem Wendemanöver werden vor Beginn einer neuen Bearbeitungsfahrt die Außenarme 203, 209 und der Mittelarm 206 wieder in die Arbeitsstellung abgesenkt.

Es versteht sich, dass in der Arbeitsstellung über die Laufwalzen 470 verschiedene Höhenlagen der Außenarme 203, 209 und des Mittelarms 206 einstellbar sind und automatisiert gehalten werden.

Für eine Überführungsfahrt schließlich werden bei stillstehenden Arbeitswellen 506 und abgesenktem Fahrwerk 457 unter Anheben des Tragrahmens 212 mit Bodenkontakt der Räder 460, 463 die Außenarme 203, 209 und der Mittelarm 206 vollständig ausgehoben, wobei dann die Außenarme 203, 209 in einer im Wesentlichen vertikalen Stellung sind, so dass der Bearbeitungsnachläufer 124 seitlich einen verhältnismäßig geringen Platzbedarf hat.

## Patentansprüche

1. Vorrichtung zum bodennahen Bearbeiten von pflanzlichem Material mit Arbeitswerkzeugen (509) zum Bearbeiten von pflanzlichem Material (121), mit wenigstens einem Arbeitswerkzeugträger (506), an dem die Arbeitswerkzeuge (509) angebracht sind, mit einem Tragrahmen (212), an dem der Arbeitswerkzeugträger (506) oder eine Anzahl von Arbeitswerkzeugträgern (506) angebracht ist beziehungsweise sind, mit einer Deichsel (127), mit der der Tragrahmen (212) an einem Zugfahrzeug (109) befestigbar ist, mit einer Deichselausrichtungseinheit (421), mit der die Deichsel (127) in Bezug auf den Tragrahmen (212) ausrichtbar ist, wobei eine Lenkpositionssensoreinheit (606, 609) zum Erfassen der Winkellage eines Zugfahrzeugs (109) in Bezug auf die Deichsel (127) und eine Deichselausrichtungssensoreinheit (703) zum Erfassen der Winkellage der Deichsel (127) zu dem Tragrahmen (212) vorhanden sind und wobei eine Zentralsteuereinrichtung (1203) vorhanden ist, die mit der Lenkpositionssensoreinheit (606, 609), mit der Deichselausrichtungssensoreinheit (703, 709) sowie mit der Deichselausrichtungseinheit (421) verbunden ist und die Deichselausrichtungseinheit (421) auf der Grundlage der Signale der Lenkpositionssensoreinheit (606, 609) sowie der Deichselausrichtungssensoreinheit (703, 709) so ansteuert, dass der Tragrahmen (212) eine vorbestimmte Spur hinter einem Zugfahrzeug (109) einhält.

2. Vorrichtung nach Anspruch 1, **dadurch gekennzeichnet, dass** die Deichsel (127) eine Parallelogrammdeichsel mit zwei parallelen Deichselstangen (412, 415) ist, wobei die Lenkpositionssensoreinheit (606, 609) an einem Anhängekupplungsbereich (403, 406) und die Deichselausrichtungssensoreinheit (703, 709) an einer Deichselstange (412, 415) angreift.

3. Vorrichtung nach Anspruch 1 oder Anspruch 2, **dadurch gekennzeichnet, dass** zwei seitliche Außenarme (203, 209) und ein in Querrichtung zwischen den Außenarmen (203, 209) angeordneter Mittelarm (206) vorhanden sind, die mit Arbeitswerkzeugträgern (506) ausgestattet und bei bestimmungsgemäßer Anordnung der Vorrichtung in vertikaler Richtung schwenkbar sind.

4. Vorrichtung nach Anspruch 3, **dadurch gekennzeichnet, dass** Schwenkpositionssensoreinheiten (906, 909; 1103, 1106) vorhanden sind, mit denen die Schwenkpositionen der Außenarme (203, 209) sowie des oder jedes Mittelarms (206) erfassbar, der Zentralsteuereinrichtung (1203) einspeisbar und durch die Zentralsteuereinrichtung (1203) derart verarbeitbar sind, dass Wendemanöver mit angehobenen Außenarmen (203, 209) und Mittelarm (206) oder Mittelarmen (206) bei aktiven Arbeitswerkzeugen (509) automatisiert durchführbar sind.

5. Vorrichtung nach Anspruch 4, **dadurch gekennzeichnet, dass** die Arbeitswerkzeugträger als drehbare Arbeitswellen (506) ausgebildet sind, dass die Arbeitswerkzeuge (509) an den Arbeitswellen (506) angebracht sind und dass für jede Arbeitswelle (506) eine Drehsensoreinheit (809, 812) vorhanden ist, mit der der Drehzustand der betreffenden Arbeitswelle (506) erfassbar und der Zentralsteuereinrichtung (1203) zum automatischen Ausführen von Wendemanövern einspeisbar sind.

6. Vorrichtung nach einem der Ansprüche 1 bis 5, **dadurch gekennzeichnet, dass** ein Energieversorgungsaggregat (424) vorhanden ist, mit dem energieverbrauchende Komponenten der Vorrichtung mit Energie beaufschlagbar sind.

7. Vorrichtung nach einem der Ansprüche 1 bis 6, **dadurch gekennzeichnet, dass** ein Fahrwerk (457) mit Rädern (460, 463) vorhanden ist, das schwenkbar an dem Tragrahmen (212) ist.

8. Verfahren zum bodennahen Bearbeiten vom pflanzlichem Material mit einer Vorrichtung (124) nach einem der Ansprüche 1 bis 7, bei dem die Vorrichtung (124) während einer Bearbeitungsfahrt eine Spur mit einem seitlichen gleichbleibenden Versatz gegenüber einer Mittellängsachse eines Zugfahrzeugs (109) einhält.

9. Verfahren nach Anspruch 8, bei dem die Vorrichtung (124) bei einem Wendemanöver gegenüber einem Zugfahrzeug (109) eine vorbestimmte Spur einhält.

10. Verfahren nach Anspruch 9, **dadurch gekennzeichnet, dass** die bei einem Wendemanöver eingehaltene Spur die gleiche Seitenlage wie die bei einer Bearbeitungsfahrt eingehaltene Spur aufweist.
